# FASCICULE DE BREVET EUROPEEN

(11) **EP 1 627 173 B1**
(45) Date de publication et mention de la délivrance du brevet: **10.01.2007**
(21) Numéro de dépôt: 04742697.8
(22) Date de dépôt: 11.05.2004
(51) Int. Cl.: F16L 37/092

(54) **DISPOSITIF DE RACCORDEMENT INSTANTANE**
SCHNELLVERBINDUNGSVORRICHTUNG
INSTANTANEOUS CONNECTION DEVICE

(30) Priorité: 28.05.2003 FR 0306488
(43) Date de publication de la demande: 22.02.2006
(73) Titulaire: LEGRIS SA, 35000 Rennes (FR)
(72) Inventeur: LE BARS, Nicolas, F-35235 Thorigne (FR)
(74) Mandataire: Lavialle, Bruno François Stéphane
(86) Numéro de dépôt international: PCT/FR2004/001141
(87) Numéro de publication internationale: WO 2004/109175

(56) Documents cités:
- EP-A- 1 308 662
- CH-A- 442 899
- GB-A- 2 292 780
- US-A- 6 056 328

## Description

La présente invention concerne un dispositif de raccordement instantané utilisable pour raccorder une extrémité de conduite à un élément d'un circuit de transport de fluide.

Un tel élément peut être une autre conduite ou un élément émetteur de fluide tel qu'une pompe ou un élément récepteur de fluide tel qu'un réservoir.

### ARRIERE PLAN DE L'INVENTION

Un dispositif de raccordement instantané comprend généralement un corps tubulaire et des moyens de retenue étanche d'une extrémité de conduite dans le corps. Ces moyens comprennent un organe de retenue agencé pour recevoir l'extrémité de conduite, et des moyens de came interposés entre le corps et l'organe de retenue pour amener l'organe de retenue d'un état de libération à un état d'agrippement de l'extrémité de conduite quand l'organe de retenue est déplacé axialement dans le corps entre une première position et une deuxième position.

Un organe de retenue couramment utilisé est constitué d'un tube dans une extrémité duquel des rainures longitudinales individualisent des griffes déformables par flexion entre l'état de libération dans lequel elles définissent un diamètre interne supérieur ou égal à un diamètre extérieur de l'extrémité de conduite et l'état d'agrippement dans lequel elles définissent un diamètre interne inférieur au diamètre externe de l'extrémité de conduite.

Les moyens de came sont généralement constitués d'une surface interne de forme tronconique ménagée dans la paroi formant le corps tubulaire de façon centrée sur l'axe du corps tubulaire.

Les dispositifs de raccordement ainsi constitués sont très efficaces. Toutefois, l'amplitude de la déformation des griffes, et donc la différence entre les diamètres internes minimal et maximal délimités par celles-ci, est limitée par l'épaisseur de la paroi du corps tubulaire dans laquelle est délimitée la surface tronconique. Le diamètre externe des conduites utilisables avec un dispositif de raccordement donné n'est donc susceptible que de très légères variations sans quoi la fermeté de l'agrippement de l'extrémité de conduite par l'organe de retenue n'est plus garanti.

De plus, les organes de retenue à griffes, autrement appelés pinces, doivent être réalisés en un matériau qui soit suffisamment souple pour permettre la déformation des griffes tout en étant suffisamment dur pour permettre la pénétration des griffes dans l'extrémité de conduite. Lorsque l'extrémité de conduite est en un matériau plastique relativement dur, le matériau utilisé pour réaliser la pince est un matériau thermodurcissable. Toutefois, un tel matériau est non recyclable et n'autorise que de faibles cadence de production. Lorsque le matériau constituant l'extrémité de conduite est relativement souple, la pince est réalisée en matériau thermoplastique souple. L'emploi d'un tel matériau thermoplastique souple est plus avantageux sur le plan de la fabrication et de la recyclabilité de la pince mais trouve ses limites dans le pouvoir de pénétration relativement faible des griffes dans l'extrémité de conduite. Les matériaux thermoplastiques durs sont inutilisables pour la réalisation de ces pinces en raison du risque de rupture des griffes lors de leur déformation entre leur deux états. EP-A-1308662 décrit un dispositif de raccordement instantané dans lequel la bague d'accrochage comporte à l'une de ses extrémités des dents séparées les unes des autres par une fente et destinées à coopérer avec une surface d'inclinaison transversale du corps.

### OBJET DE L'INVENTION

L'invention a pour objet de fournir un dispositif de raccordement présentant de bonnes capacités d'accrochage tout en ayant une structure simple de fabrication relativement peu coûteuse.

### BREVE DESCRIPTION DE L'INVENTION

A cet effet, on prévoit, selon l'invention, un dispositif de raccordement instantané comprenant un corps tubulaire et des moyens de retenue étanche d'une extrémité de conduite dans le corps, ces moyens comprenant un organe de retenue agencé pour recevoir l'extrémité de conduite et des moyens de came interposés entre le corps et l'organe de retenue pour amener l'organe de retenue d'un état de libération à un état d'agrippement de l'extrémité de conduite quand l'organe de retenue est déplacé axialement dans le corps entre une première position et une deuxième position, l'organe de retenue comprenant deux mors indépendant montés dans le corps pour coulisser entre les deux positions susdites, et les moyens de came comportant deux ergots transversaux solidaires des mors ou du corps pour coopérer par glissement avec des surfaces transversales solidaires du corps ou des mors qui sont inclinées par rapport à la direction de coulissement.

Ainsi, l'amplitude de déplacement des mors l'un par rapport à l'autre ne dépend plus de l'épaisseur du corps tubulaire mais de sa circonférence généralement supérieure à son épaisseur. La constitution de l'organe de retenue en mors indépendants qui sont rapprochés ou écartés l'un de l'autre ne nécessite pas de déformation de l'organe de retenue qui peut donc être réalisé en matériau thermoplastique dur. Ceci augmente en outre la fiabilité de l'organe de retenue.

De préférence alors, chaque ergot transversal s'étend en saillie externe d'un des mors et les surfaces transversales appartiennent au corps.

Une telle structure facilite la réalisation du corps par injection de matériau plastique en permettant un démoulage relativement facile.

Avantageusement alors, les surfaces transversales sont définies dans une empreinte ménagée transversalement dans le corps et, de préférence, l'empreinte débouche à l'extérieur du corps.

Ainsi, l'empreinte permet d'accéder aux ergots et de manipuler ceux-ci directement depuis l'extérieur du dispositif de raccordement.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue en perspective d'un dispositif de raccordement conforme à l'invention,
- la figure 2 est une vue partielle en perspective avec écorché de ce dispositif,

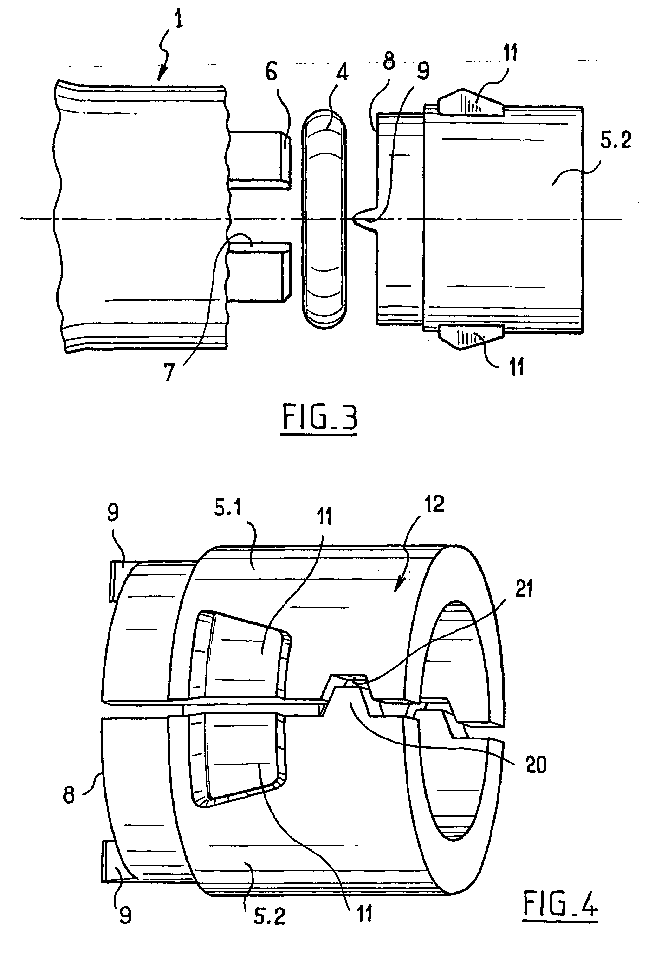

- la figure 3 est une vue schématique partielle en élévation et en éclaté du dispositif,
- la figure 4 est une vue en perspective de l'organe de retenue,
- la figure 5 est une vue en bout de celui-ci,
- la figure 6 est une vue partielle en perspective du dispositif.

### DESCRIPTION DETAILLEE DE L'INVENTION

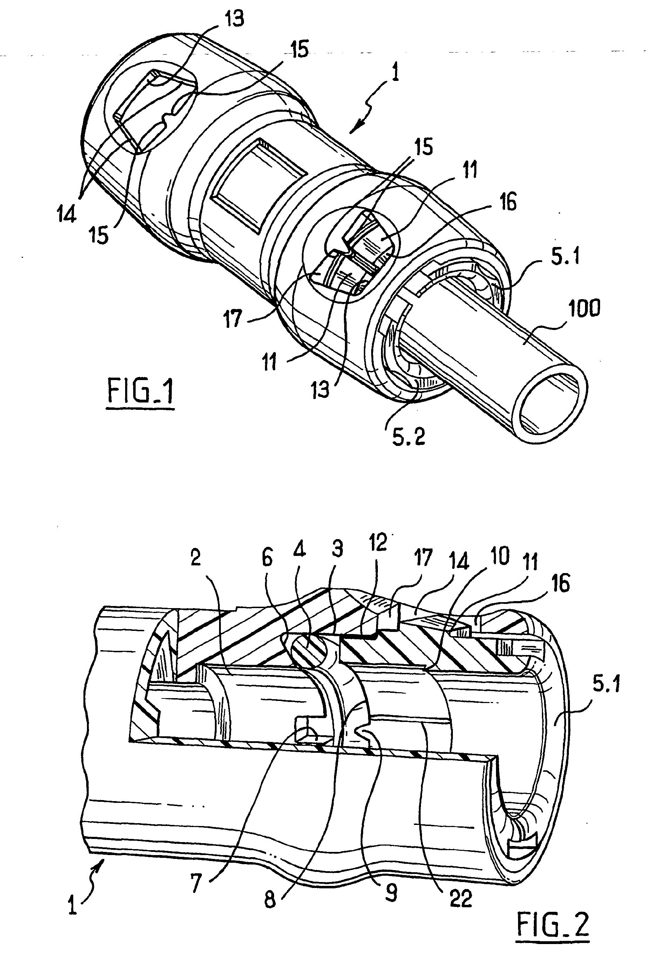

Le dispositif de raccordement conforme à l'invention est ici un raccord permettant la connexion de deux extrémités de conduite 100 l'une à l'autre (une seule est visible à la figure 1). L'invention est également applicable au raccordement d'une extrémité de conduite à un élément d'un circuit de transport de fluide, cet élément étant émetteur de fluide comme une pompe ou récepteur de fluide comme un réservoir.

Le raccord comprend un corps, généralement désigné en 1, de forme tubulaire délimitant un canal étagé comportant un tronçon central 2 et des tronçons d'extrémité 3 recevant chacun des moyens de retenue étanche d'une extrémité de conduite 100 dans le corps 1. Le corps est ici symétrique et les moyens de retenue étanche logés dans chacune des extrémités du corps 1 sont ici identiques. En variante, une des extrémités peut être pourvue de moyens de retenue étanche différents de ceux qui vont être décrits. Dans le cas du raccordement d'une extrémité de conduite à un élément d'un circuit de transport de fluide, le raccord peut avoir une extrémité en une seule pièce avec l'élément de circuit ou montée sur l'élément de circuit de manière connue par encliquetage, emmanchement à force ou tout autre moyen de fixation amovible ou définitive.

Les moyens de retenue étanche comprennent un élément d'étanchéité 4 et un organe de retenue 5 qui sont agencés pour recevoir l'extrémité de conduite.

L'élément d'étanchéité 4 est ici un joint torique en élastomère ayant un diamètre interne légèrement inférieur à un diamètre externe de l'extrémité de conduite 100. L'élément d'étanchéité 4 est adjacent à un épaulement 6 s'étendant entre le tronçon d'extrémité 3 et le tronçon central 2. L'épaulement 6 est délimité par une surface tronconique convexe dans laquelle sont ménagés axialement des renfoncements 7.

L'organe de retenue 5 est de forme tubulaire et comprend deux mors 5.1, 5.2. Chaque mors 5.1, 5.2 a une section d'entrée évasée pour faciliter l'introduction de l'extrémité de conduite 100 dans l'organe de retenue 5 et, à l'opposé, a une face terminale radiale 8 en saillie axiale de laquelle s'étendent des redans 9 en regard des renfoncements 7. Les redans 9 et les renfoncements 7 sont ici disposés symétriquement par rapport aux mors et à l'épaulement. Les mors 5.1 et 5.2 sont montés dans le tronçon d'extrémité 3 pour coulisser parallèlement à la direction d'introduction de l'extrémité de conduite 100 entre une première position et une deuxième position successives dans le sens inverse du sens d'introduction de l'extrémité de conduite 100. Lorsque l'organe de retenue 5 est dans la première position, l'élément d'étanchéité 4 est écrasé et étiré entre l'épaulement 6 et les redans 9, les redans 9 et les renfoncements 7 définissant des chicanes dans lesquelles s'étend l'élément d'étanchéité 4. Leurs nombres peuvent être modifiés. L'élément d'étanchéité 4 est également expansé radialement du fait de la pente de la surface tronconique convexe formant l'épaulement 6. Lorsque l'organe de retenue 5 est dans la deuxième position (figure 2), l'élément d'étanchéité 4 est dans un état de moindre déformation de telle manière qu'il tend à rappeler élastiquement l'organe de retenue 5 vers cette position.

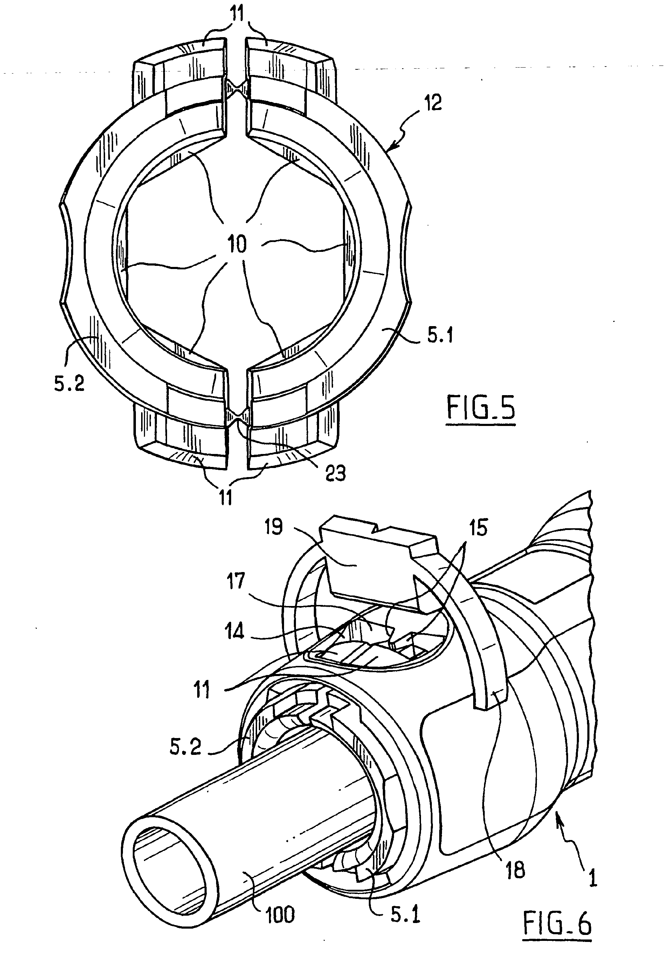

Chaque mors 5.1, 5.2 a une surface interne pourvue de dents 10. Les dents 10 ont la forme de secteurs d'accrochage ici rectilignes (voir la figure 5) mais pouvant également être convexes ou concaves. Dans cette dernière variante, le secteur est en arc de cercle de rayon supérieur au rayon externe de l'extrémité de conduite (dans le cas contraire, le secteur est en contact avec la conduite par deux pointes formant des zones de concentration de contraintes qui tendent à s'émousser).

Deux ergots 11 s'étendent transversalement en saillie de la surface externe 12 de chaque mors 5.1, 5.2 au voisinage des bords longitudinaux des mors 5.1, 5.2.

Chaque paire d'ergots 11 adjacents (appartenant chacun à un des mors 5.1, 5.2) est reçue dans une empreinte 13 qui est ménagée transversalement dans la paroi du corps 1 et qui débouche de part et d'autre de cette paroi.

Les empreintes 13 s'étendent longitudinalement par rapport au corps 1 et présentent deux faces latérales 14 qui divergent l'une de l'autre dans le sens d'introduction de l'extrémité de conduite 100 dans le corps 1. Les faces latérales 14 coopèrent chacune par glissement avec un ergot 11 à la manière de cames pour amener l'organe de retenue 5 d'un état de libération à un état d'agrippement de l'extrémité de conduite 100 lorsque l'organe de retenue 5 est déplacé dans le corps 1 de sa première position vers sa deuxième position.

Dans chaque empreinte 13 s'étend une saillie triangulaire dont deux côtés 15 contigus s'étendent en regard des faces latérales 14. Les côtés 15 coopèrent par glissement avec les ergots 11 à la manière de cames pour amener l'organe de retenue 5 de l'état d'agrippement à l'état de libération de l'extrémité de conduite 100 lorsque l'organe de retenue 5 est déplacé dans le corps 1 de sa deuxième position vers sa première position.

Dans l'état de libération les mors délimitent un diamètre de passage pour l'extrémité de conduite 100 sensiblement égal au diamètre externe de cette dernière. Dans l'état d'agrippement, les dents 10 mordent dans la surface externe de l'extrémité de conduite 100.

Lorsque l'organe de retenue est dans sa deuxième position, les ergots 11 délimitent avec l'empreinte 13 un espace libre arrière 16 par référence au sens d'introduction de l'extrémité de conduite 100 dans le corps 1, c'est à dire d'un côté opposé à la première position. Il est possible d'introduire dans l'espace libre arrière 16 l'extrémité d'un outil tel qu'un tournevis pour repousser les ergots 11 vers l'avant afin d'amener l'organe de retenue 5 dans sa première position. Il peut également être prévu que l'un au moins des mors 5.1, 5.2 ait une extrémité en saillie du corps 1 lorsque l'organe de retenue 5 est dans sa deuxième position. En appuyant sur cette extrémité, l'organe de retenue 5 peut être enfoncé dans sa première position dans laquelle il permet la libération de l'extrémité de conduite 100. Les deux mors 5.1, 5.2 peuvent posséder une demi-collerette pour faciliter leur manipulation ou seul un des mors 5.1, 5.2 peut présenter une demi-collerette (en particulier lorsque les deux mors sont solidaires axialement) ou une collerette prenant appui sur l'autre mors.

Lorsque l'organe de retenue 5 est dans sa deuxième position, les ergots 11 délimitent avec l'empreinte 13 un espace libre avant 17 par référence au sens d'introduction de l'extrémité de conduite 100 dans le corps 1. Le dispositif de raccordement de l'invention comprend des moyens de butée amovibles s'étendant dans cet espace libre, ici une bague amovible 18 agencée pour se clipser sur le corps 1 et pourvue d'un redan interne 19 destiné à se loger dans l'espace libre avant 17 pour empêcher un déplacement des ergots 11 vers l'avant.

Les mors 5.1, 5.2 sont pourvus de moyens de leur entraînement axial mutuel. Ces moyens comprennent ici une saillie 20 s'étendant depuis un bord longitudinal du mors 5.1 pour être reçue dans une encoche 21 ménagée dans le bord longitudinal en regard appartenant au mors 5.2. La saillie 20 peut coulisser dans l'encoche 21 selon une direction tangentielle à l'organe de retenue 5 afin de ne pas gêner l'écartement et le rapprochement des mors 5.1, 5.2.

Le corps 1 comprend des moyens d'indexation angulaire de l'organe de retenue 5 par rapport au corps 1. Ces moyens sont ici formés par les empreintes 13 coopérant avec les ergots mais peuvent comprendre également un redan interne reçu entre les deux mors 5.1, 5.2. par exemple. De préférence alors, les deux mors 5.1, 5.2 comprennent également des moyens de blocage en rotation de l'extrémité de conduite 100 par rapport aux mors. Ces moyens comprennent ici des dents allongées 22 s'étendant axialement et en saillie interne dans l'organe de retenue 5. Ceci permet d'éviter un « dévissage » de l'extrémité de conduite 100.

Lorsque l'extrémité de conduite 100 est introduite dans le corps 1, l'extrémité de conduite 100 vient en butée contre l'organe de retenue 5 alors dans son état d'agrippement et le repousse de sa deuxième position vers sa première position à l'encontre de l'effort exercé sur l'organe de retenue par l'élément d'étanchéité 4. Quand l'organe de retenue 5 arrive dans sa première position, l'élément d'étanchéité 4 a été repoussé par l'organe de retenue 5 sur l'épaulement 6 où il est expansé radialement et étiré par les chicanes formées par les renfoncements 7 et les redans 9. L'organe de retenue 5 est lui amené dans son état de libération sous l'effort de pénétration axiale exercé par la conduite. L'organe de retenue permet alors le passage de l'extrémité de conduite 100 qui est introduite à force dans l'élément d'étanchéité 4 jusqu'à venir en butée d'un épaulement situé dans le tronçon central 2. L'introduction de la conduite dans l'élément d'étanchéité est facilitée par l'expansion radiale de l'élément d'étanchéité sur la partie tronconique de l'épaulement 6 et par son étirement dans les chicanes, ces déformations provoquant également une diminution de la section transversale de l'élément d'étanchéité 4. Ceci limite la nécessité d'un recours au graissage de l'élément d'étanchéité pour faciliter l'introduction de la conduite, opération dont la répétabilité est aléatoire.

L'élément d'étanchéité 4 tend à revenir dans son état de moindre déformation de sorte qu'il glisse sur la surface tronconique de l'épaulement 6 et se détend en repoussant l'organe de retenue 5 vers sa deuxième position.

Pendant le mouvement de l'organe de retenue 5 de sa première position vers sa deuxième position, les ergots 11 et les surfaces latérales 14 de l'empreinte 13 coopèrent pour amener l'élément de conduite 5 de son état de libération vers son état d'agrippement.

L'élément d'étanchéité 4 amorce ainsi le serrage de l'organe de retenue 5 sur l'extrémité de conduite de sorte que, lorsqu'un effort de traction est exercé sur la conduite ou que le circuit est mis sous pression, la conduite recule et entraîne l'organe de retenue dans sa deuxième position. L'élément d'étanchéité 4 permet de la sorte de compenser une partie du jeu de fonctionnement de l'organe de retenue 5 et de limiter le recul de l'extrémité de conduite 100 lors de la mise sous pression du circuit de transport de fluides auquel ils appartiennent.

L'organe de retenue 5 est ici réalisé par injection de matériau thermoplastique dur dans un moule. Afin d'en faciliter la manipulation et le montage, les mors 5.1, 5.2 sont reliés l'un à l'autre par une zone frangible 23 (voir figure 5) qui est brisée lors du montage pour désolidariser les deux mors l'un de l'autre.

Bien entendu, l'invention n'est pas limitée au mode de réalisation décrit et on peut y apporter des variantes de réalisation sans sortir du cadre de l'invention tel que défini par les revendications.

Les faces latérales 14 et les côtés 15 peuvent être courbes ou rectilignes, parallèles l'un à l'autre ou non.

Les moyens de came peuvent être réalisés par inversion cinématique de ceux décrits, à savoir une empreinte portée par chaque mors pour recevoir un ergot s'étendant en saillie interne dans le corps.

Pour assurer le rappel de l'organe de retenue 5 dans son état d'agrippement, le corps peut comprendre un tronçon élastique qui exerce sur les mors 5.1, 5.2 un effort radial de rapprochement. L'introduction de l'extrémité de conduite dans l'organe de retenue 5 écarte les mors 5.1, 5.2 en déformant élastiquement ce tronçon du corps 1. Les mors 5.1, 5.2 sont alors serrés sur l'extrémité de conduite de sorte qu'un effort de traction sur celle-ci entraîne l'organe de retenue 5 vers sa deuxième position.

L'organe de retenue peut être réalisé en métal ou en matériau thermoplastique ou thermodurcissable.

Bien que le corps ait été décrit comme étant monobloc, le corps peut être réalisé en plusieurs pièces.

## Revendications

1. Dispositif de raccordement instantané comprenant un corps (1) tubulaire et des moyens de retenue étanche d'une extrémité de conduite dans le corps, ces moyens comprenant un organe de retenue (5) agencé pour recevoir l'extrémité de conduite et des moyens de came (11, 14) interposés entre le corps et l'organe de retenue pour amener l'organe de retenue d'un état de libération à un état d'agrippement de l'extrémité de conduite quand l'organe de retenue est déplacé axialement dans le corps entre une première position et une deuxième position, **caractérisé en ce que** l'organe de retenue comprend deux mors (5.1, 5.2) indépendants montés dans le corps pour coulisser entre les deux positions susdites, et **en ce que** les moyens de came comportent deux ergots transversaux (11) solidaires des mors ou du corps pour coopérer par glissement avec des faces latérales (14) solidaires du corps ou des mors qui sont inclinées par rapport à la direction de coulissement.

2. Dispositif selon la revendication 1, **caractérisé en ce que** chaque ergot transversal (11) s'étend en saillie externe d'un des mors (5.1, 5.2) et **en ce que** les faces latérales (14) appartiennent au corps (1).

3. Dispositif selon la revendication 2, **caractérisé en ce que** les faces latérales (14) sont définies dans une empreinte (13) ménagée transversalement dans le corps (1).

4. Dispositif selon la revendication 3, **caractérisé en ce que** l'empreinte (13) débouche à l'extérieur du corps (1).

5. Dispositif selon la revendication 3, **caractérisé en ce que**, lorsque les mors (5.1, 5.2) sont dans la deuxième position, les ergots (11) laissent dans l'empreinte (13) un espace libre (16) arrière à l'opposé de la première position.

6. Dispositif selon la revendication 4 ou la revendication 5, **caractérisé en ce que**, lorsque les mors (5.1, 5.2) sont dans la deuxième position, les ergots (11) laissent dans l'empreinte du côté de la première position un espace libre avant (17) et **en ce que** le dispositif comprend des moyens de butée amovibles (18, 19) s'étendant dans cet espace libre.

7. Dispositif selon la revendication 5 ou la revendication 6, **caractérisé en ce qu'**il comprend des moyens additionnels de came (15, 11) interposés entre le corps (1) et l'organe de retenue (5) pour amener l'organe de retenue de l'état d'agrippement à l'état de libération lorsque l'organe de retenue est placé axialement dans le corps entre la deuxième position et la première position, et **en ce que** les moyens additionnels de came comprennent des faces latérales (15) s'étendant dans l'espace libre avant (17).

8. Dispositif selon la revendication 1, **caractérisé en ce que** les mors (5.1, 5.2) comprennent des moyens (20, 21) de leur solidarisation axiale l'un à l'autre.

9. Dispositif selon la revendication 8, **caractérisé en ce que** les moyens de solidarisation axiale comprennent des moyens de butée axiale (20, 21) complémentaires et solidaires de chaque mors, ces moyens de butée étant agencés pour laisser libre le rapprochement et l'écartement des mors (5.1, 5.2) l'un par rapport à l'autre.

10. Dispositif selon la revendication 1, **caractérisé en ce que** le corps (1) comprend, au voisinage des mors (5.1, 5.2) dans leur première position, des moyens de maintien élastique (4) des mors dans leur état d'agrippement.

11. Dispositif selon la revendication 1, **caractérisé en ce que** les mors (5.1, 5.2) sont pourvus intérieurement de dents (10) pour mordre une surface extérieure de l'extrémité de conduite.

12. Dispositif selon la revendication 1, **caractérisé en ce qu'**au moins un des mors (5.1, 5.2) possède, lorsqu'il est dans sa deuxième position, une extrémité en saillie du corps.

13. Dispositif selon la revendication 1, **caractérisé en ce qu'**il comprend des moyens d'indexation angulaire (11, 14) de l'organe de retenue (5) par rapport au corps (1).

14. Dispositif selon la revendication 13, **caractérisé en ce qu'**il comprend des moyens (22) de blocage en rotation de l'extrémité de conduite (100) par rapport à l'organe de retenue (5).

## Claims

1. An instantaneous coupling device comprising a tubular body (1) and means for retaining a pipe end in leaktight manner in the body, said means comprising a retaining member (5) arranged to receive the pipe end and cam means (11, 14) interposed between the body and the retaining member to bring the retaining member from a release state in which it releases the pipe end to a grip state in which it grips the pipe end when the retaining member is moved axially in the body from a first position to a second position, the device being **characterized in that** the retaining member comprises two independent jaws (5.1, 5.2) mounted in the body to slide between the two above-mentioned positions, and **in that** the cam means comprise two transverse studs (11) secured to the jaws or to the body to co-operate in sliding with transverse surfaces (14) secured to the body or the jaws and that are inclined relative to the sliding direction.

2. A device according to claim 1, **characterized in that** each transverse stud (11) projects outwards from one of the jaws (5.1, 5.2), and **in that** the transverse surfaces (14) belong to the body (1).

3. A device according to claim 2, **characterized in that** the transverse surfaces (14) are defined in a hole (13) formed transversely through the body (1).

4. A device according to claim 3, **characterized in that** the hole (13) opens to the outside of the body (1).

5. A device according to claim 3, **characterized in that**, when the jaws (5.1, 5.2) are in the second position, the studs (11) leave a rear empty space (16) in the hole (13) remote from the first position.

6. A device according to claim 4 or claim 5, **characterized in that**, when the jaws (5.1, 5.2) are in the second position, the studs (11) leave a front empty space (17) in the hole beside the first position, and **in that** the device includes removable abutment means (18, 19) extending into said empty space.

7. A device according to claim 5 or claim 6, **characterized in that** it includes additional cam means (15, 11) interposed between the body (1) and the retaining member (5) to bring the retaining member from the grip state to the release state when the retaining member is placed axially in the body between the second position and the first position, and **in that** the additional cam means comprise transverse surfaces (15) extending into the front empty space (17).

8. A device according to claim 1, **characterized in that** the jaws (5.1, 5.2) include means (20, 21) for securing them axially to each other.

9. A device according to claim 8, **characterized in that** the axial securing means comprise complementary axial abutment means (20, 21) secured to each of the jaws, said abutment means being arranged to leave the jaws (5.1, 5.2) free to slide apart from and towards each other.

10. A device according to claim 1, **characterized in that**, in the vicinity of the jaws (5.1, 5.2) in their first position, the body (1) includes resilient means (4) for holding the jaws in their grip state.

11. A device according to claim 1, **characterized in that** the jaws (5.1, 5.2) are provided internally with teeth (10) for biting into an outside surface of the pipe end.

12. A device according to claim 1, **characterized in that** at least one of the jaws (5.1, 5.2), when in its second position, possesses an end that projects from the body.

13. A device according to claim 1, **characterized in that** it includes angular indexing means (11, 14) for indexing the angular position of the retaining member (5) relative to the body (1).

14. A device according to claim 13, **characterized in that** it includes means (22) for preventing the pipe end (100) from turning relative to the retaining member (5).

## Patentansprüche

1. Schnellverbindungsvorrichtung, umfassend ein rohrförmiges Gehäuse (1) und Haltemittel, um ein Leitungsende auf dichte Weise in dem Gehäuse zu halten, wobei diese Haltemittel ein Halteelement (5) umfassen, das derart ausgebildet ist, dass es das Leitungsende aufnimmt, sowie Nockenmittel (11, 14), die zwischen dem Gehäuse und dem Halteelement angeordnet sind, um das Halteelement von einem das Leitungsende freigebenden Zustand in einen das Leitungsende festhaltenden Zustand zu bringen, wenn das Halteelement in dem Gehäuse zwischen einer ersten Position und einer zweiten Position axial verschoben wird, **dadurch gekennzeichnet, dass** das Halteelement zwei getrennte Spannbacken (5.1, 5.2) umfasst, die in dem Gehäuse derart gelagert sind, dass sie zwischen den beiden oben genannten Positionen verschiebbar sind, und dass die Nockenmittel zwei quer gerichtete Nasen (11) umfassen, die fest mit den Spannbacken oder dem Gehäuse verbunden sind, um gleitend mit Seitenflächen (14) zusammenzuwirken, die fest mit dem Gehäuse oder den Spannbacken verbunden und relativ zur Gleitrichtung geneigt sind.

2. Vorrichtung nach Anspruch 1, **dadurch gekennzeichnet, dass** jede quer gerichtete Nase (11) von einer der Spannbacken (5.1, 5.2) nach außen vorsteht und dass die Seitenflächen (14) zum Gehäuse (1) gehören.

3. Vorrichtung nach Anspruch 2, **dadurch gekennzeichnet, dass** die Seitenflächen (14) in einer Vertiefung (13) definiert sind, die in Querrichtung in dem Gehäuse (1) ausgebildet ist.

4. Vorrichtung nach Anspruch 3, **dadurch gekennzeichnet, dass** die Vertiefung (13) auf der Außenseite des Gehäuses (1) mündet.

5. Vorrichtung nach Anspruch 3, **dadurch gekennzeichnet, dass** die Nasen (11) in der zweiten Position der Spannbacken (5.1, 5.2) in der Vertiefung (13) einen hinteren freien Platz (16) entgegengesetzt zur ersten Position lassen.

6. Vorrichtung nach Anspruch 4 oder Anspruch 5, **dadurch gekennzeichnet, dass** die Nasen (11) in der zweiten Position der Spannbacken (5.1, 5.2) in der Vertiefung auf der Seite der ersten Position einen vorderen freien Platz (17) lassen und dass die Vorrichtung lösbare Anschlagmittel (18, 19) umfasst, die sich in diesen freien Platz erstrecken.

7. Vorrichtung nach Anspruch 5 oder Anspruch 6, **dadurch gekennzeichnet, dass** sie zusätzliche Nockenmittel (15, 11) umfasst, die zwischen dem Gehäuse (1) und dem Halteelement (5) angeordnet sind, um das Halteelement von einem Haltezustand in einen Freigabezustand zu bringen, wenn das Halteelement in dem Gehäuse zwischen der zweiten Position und der ersten Position axial verschoben wird, und dass die zusätzlichen Nockenmittel Seitenflächen (15) umfassen, die sich in den vorderen freien Raum (17) hinein erstrecken.

8. Vorrichtung nach Anspruch 1, **dadurch gekennzeichnet, dass** die Spannbacken (5.1, 5.2) Mittel (20, 21) für ihre gegenseitige Verbindung in axialer Richtung umfassen.

9. Vorrichtung nach Anspruch 8, **dadurch gekennzeichnet, dass** die Mittel zum axialen Verbinden axiale Anschlagmittel (20, 21) umfassen, die zueinander komplementär und jeweils fest mit einer Spannbacke verbunden sind, wobei diese Anschlagmittel derart ausgebildet sind, dass sie das gegenseitige Annähern und Auseinanderrücken der Spannbacken (5.1, 5.2) gestatten.

10. Vorrichtung nach Anspruch 1, **dadurch gekennzeichnet, dass** das Gehäuse (1) nahe den Spannbacken (5.1, 5.2) in ihrer ersten Position elastische Haltemittel (4) umfasst, um die Spannbacken in ihrem Haltezustand zu halten.

11. Vorrichtung nach Anspruch 1, **dadurch gekennzeichnet, dass** die Spannbacken (5.1, 5.2) innen mit Zähnen (10) versehen sind, die dazu bestimmt sind, in eine Außenfläche des Leitungsendes einzugreifen.

12. Vorrichtung nach Anspruch 1, **dadurch gekennzeichnet, dass** mindestens eine der Spannbacken (5.1, 5.2) in ihrer zweiten Position ein aus dem Gehäuse vorstehendes Ende hat.

13. Vorrichtung nach Anspruch 1, **dadurch gekennzeichnet, dass** sie Winkelindexierungsmittel (11, 14) zur Winkelindexierung des Halteelements (5) relativ zum Gehäuse (1) umfasst.

14. Vorrichtung nach Anspruch 13, **dadurch gekennzeichnet, dass** sie Mittel zur Drehblockierung des Leitungsendes (100) relativ zum Halteelement (5) umfasst.
